# EUROPEAN PATENT SPECIFICATION

(11) **EP 1 093 949 B1**
(45) Date of publication and mention of the grant of the patent: **03.05.2006**
(21) Application number: 00121096.2
(22) Date of filing: 28.09.2000
(51) Int. Cl.: B60J 7/06

(54) **Canvas cover for trucks**
Abdeckplane für Lastkraftwagen
Bâche pour camion

(30) Priority: 22.10.1999 IT UD990195
(43) Date of publication of application: 25.04.2001
(73) Proprietor: Cramaro Italia Srl, 37044 Cologna Veneta (Vr) (IT)
(72) Inventor: Capponi, Massimo, 36057 Arcugnano (VI) (IT); Castagnaro, Alberto, 37047 San Bonifacio (VR) (IT)
(74) Representative: Petraz, Gilberto Luigi

(56) References cited:
- EP-A- 0 415 715
- EP-A- 0 885 759
- DE-A- 3 340 063
- US-A- 4 281 872
- US-A- 5 429 408
- US-A- 5 531 497
- US-A- 5 690 377

## Description

### FIELD OF THE INVENTION

The invention concerns a canvas cover for trucks of the type comprising a body able to contain goods.

To be more exact, the invention refers to a canvas cover able to be used to close bodies which are open at least at the top.

### BACKGROUND OF THE INVENTION

The state of the art includes various types of canvas covers used to cover the top and possibly the rear of truck bodies.

Such covers comprise a canvas able to slide on guide means mounted on the body of the truck, so as to be moved from an open position, in which it is folded towards the front end of the body, to a closed position in which it is completely extended to cover the body.

The canvas can be moved either by means of manually activated mechanical drawing assemblies, or by appropriate motorized drawing means.

Manually activated mechanical drawing assemblies, normally comprising means with chains and toothed wheels, are not always practical and efficient, and need frequent maintenance.

A conventional canvas cover comprises rigid transverse elements, generally consisting of tubular pieces, associated with the canvas to support it and prevent it from sagging in the center.

When the canvas is moved, the transverse elements slide on the upper profile of the body, and are arranged close together towards the front end of the body when the canvas assumes its open position, and are distanced from each other when it assumes its closed position.

The repeated movement of the canvas thus causes considerable wear on the supporting transverse elements, and a deterioration to the upper profile of the body.

Another disadvantage of canvas covers of this type is , that, during the production stage, it is necessary to provide different supporting transverse elements, at least in length, according to the width of the body.

This entails higher production costs and management problems in storing the components of the cover.

Conventional covers, moreover, entail problems in the steps of moving the canvas.

In fact, when the canvas is folded back, it can become entangled or bent, especially in correspondence with its lateral edges, preventing it from being folded back completely or in any case making this operation more difficult.

On the contrary, during the extension step, the main problem is the difficulty of stretching the canvas adequately and uniformly.

To facilitate this task, the state of the art provides to use tensioning means, usually activated manually, arranged at the rear of the body.

Although quite effective, such tensioning means cannot be applied to bodies equipped with a rear opening, because they would interfere with said opening. US-A5,429,408 discloses a tarp cover system having the feactures of the preamble of claim 1.

The present Applicant has devised and embodied this invention to overcome these shortcomings and to obtain other advantages.

### SUMMARY OF THE INVENTION

The invention is set forth and characterized in the main claim, while the dependent claims describe other characteristics of the invention.

The purpose of the invention is to achieve a canvas cover for the bodies of trucks which will allow practical and speedy operations to move the canvas, and will permit the canvas to be completely folded back in its open position, and adequately tensioned in its closed position.

Another purpose of the invention is to achieve a cover for the bodies of trucks provided with transverse elements to support the canvas of the type which can be adjusted in length and able to slide easily and without problems of wear on the upper profile of the body.

The main purpose of the invention, as solved by the combination of features of claim 1, is provide a cover equipped with an assembly to draw the canvas which is practical and effective, and at the same time economical and requiring little maintenance.

The cover according to the invention comprises a canvas constrained to transverse supporting elements distributed, according to a desired interaxis, in the direction of the length of the body and resting on the sides of the latter in correspondence with the ends.

The transverse supporting elements are constrained, in correspondence with the ends, to two cables closed in a ring, each of which is associated with one side of the body.

Each cable is mounted on a pair of pulleys of which one has a drawing function and the other a return function.

The two drawing pulleys are connected together by means of a transverse shaft and one of them is associated with a drawing assembly by means of which the canvas is moved.

According to a characteristic feature of the invention, the drawing assembly comprises a manual mechanism with a crank, associated with a mechanical reduction unit, able to make the drawing pulley and therefore the relative cable rotate, consequently moving the canvas.

In further evolutions of the invention, the drawing assembly can include drive members of an electric, hydraulic or pneumatic type.

The mechanical reduction unit renders the drawing assembly, which can be mounted in advance, safe and reliable, and also substantially maintenance-free.

According to a variant, between each pair of pulleys which move the cables there is an intermediate return pulley.

In one embodiment of the invention, the intermediate return pulley is mobile vertically; its function is to tension the relative cable.

According to a variant, the cables are tensioned by traction means associated coaxially with the cable.

The traction means arranged laterally on the body allow to use the cover even on bodies provided with rear apertures, for example of the pivoting type or double door type, as there is no interference between said traction means and said apertures.

According to another characteristic feature of the invention, the ends of the transverse supporting elements are associated at least at the lower part with means made of anti-friction material which facilitate their sliding on the upper profile of the sides of the body, at the same time preventing wear thereon.

According to a variant, the ends of the transverse supporting elements are of the extendible type, to allow to vary the length according to the width of the body on which the cover has to be applied.

In accordance with a further characteristic aspect of the invention, the canvas is associated, in correspondence with its lateral edges, with longitudinal bands made of semi-rigid material able to facilitate the operation to fold back the canvas, preventing it from becoming entangled between the transverse supporting elements.

### BRIEF DESCRIPTION OF THE DRAWINGS

These and other characteristics of the invention will become clear from the following description of a preferred form of embodiment given as a non-restrictive example with reference to the attached drawings wherein:
- Fig. 1: shows a truck with a body equipped with the canvas cover according to the invention in the open position;
- Fig. 2: shows the truck from Fig. 1 with the canvas cover in the closed position;
- Fig. 3: shows a cross section of a detail of the canvas cover according to the invention;
- Fig. 4: is a three-dimensional view of a detail of the lateral edge of the canvas cover according to the invention;
- Fig. 5: is a part and front view of the canvas cover according to the invention in the closed position;
- Fig. 6: is a three-dimensional view of a detail of a transverse supporting element of the canvas cover according to the invention;
- Figs. 7a-7c: show a cross-section of the transverse supporting element shown in Fig. 6 in three different assembly conditions;
- Fig. 8: is a side view of the drawing assembly for the canvas cover according to the invention in a first embodiment;
- Fig. 9: shows a detail of the drawing assembly shown in Fig. 8 according to a variant of the invention;
- Fig. 10: shows a variant of Fig. 8.

### DETAILED DESCRIPTION OF PREFERRED EMBODIMENT

With reference to the attached drawings, a canvas cover 10 according to the invention is able to be used to close the top, or also the rear, of bodies 11 of trucks 12 of the type comprising a base plane 11c, at least two lateral sides 11a and a front wall 11b

The cover 10 comprises a canvas 14 of a length at least equal to the length of the sides 11a and a width at least equal to the distance between the sides 11a.

In correspondence with its two lateral edges substantially located above the sides 11a, the canvas 14 is provided with closed flaps 23 extending for the whole length of the canvas 14 and inside which corresponding longitudinal bands 24, made of semi-rigid material, are inserted.

In a preferential embodiment, the longitudinal bands 24 are made of plastic material such as for example high density polyurethane (PEHD) or similar.

The canvas 14 is also associated with a plurality of supporting elements 13 arranged transverse with respect to the body 11, therefore substantially orthogonal to the sides 11a.

To be more exact, the supporting elements 13 are arranged below the canvas 14 and their function is to support the canvas 14, preventing it from sagging in the space between the sides 11a.

In this case, the supporting elements 13 consist of bow-shaped tubular pieces, with their convex side facing upwards, so that the canvas 14 is higher in the center than at the sides 11a.

The ends 13a of the supporting elements 13 are arranged above the two sides 11a and are associated with extension terminals 15 which allow to vary the length of the supporting elements 13 according to the distance between the sides 11a, and hence the width of the body 11, on which the cover 10 is applied.

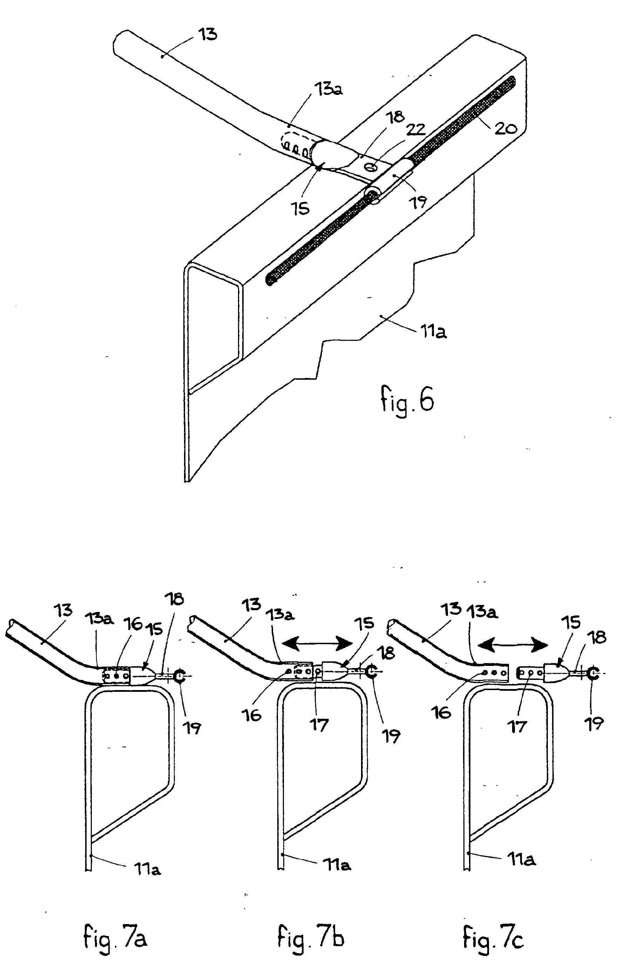

To be more exact, as shown in Figs. 7a-7c, the extension terminals 15 are able to be inserted, for a longer or shorter section, inside the ends 13a and are provided with holes 17 able to align with mating holes 16 provided on said ends 13a.

The extension terminals 15 are able to be clamped in the desired position at the ends 13a, by screw or pin means which are not shown here, screwed or inserted inside the aligned holes 16 and 17.

On each of said ends 13a a pad 25 is inserted, made of a composite anti-friction material which covers at the lower part not only the end 13a but also the relative extension terminal 15.

The material of which said pads 25 are composed is advantageously a synthetic material with high resistance to wear, such as for example composite polyethylene.

In a preferential embodiment of the invention, the pads 25 are of the inter-changeable type.

Each extension terminal 15 comprises an extension 18, facing outwards, equipped with a through hole 22 and at the end of which there is a longitudinal tube 19.

The closed flaps 23 of the canvas 14, the longitudinal bands 24 and the pads 25 are equipped with through holes which are aligned and mating in size with the through holes 22 of the extensions 18.

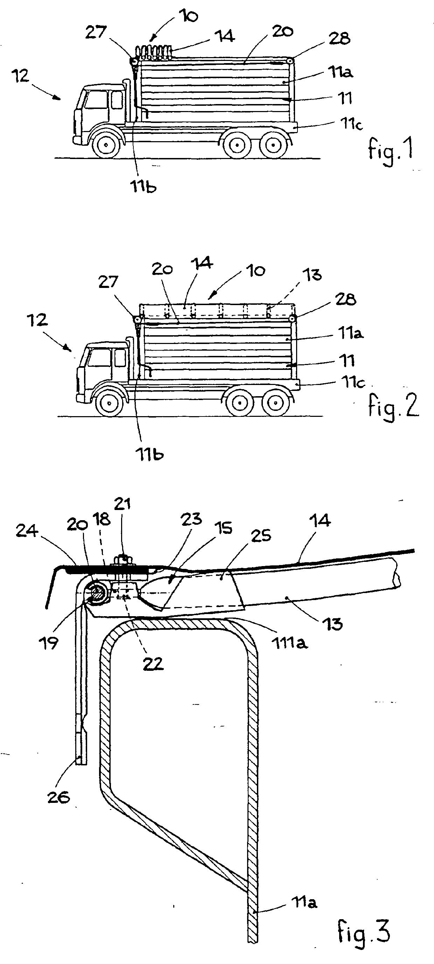

Relative bolts 21 are inserted into the through holes 22, and the canvas 14 is attached to the supporting elements 13 (Figs. 3, 4, 5) by means of said bolts 21.

In this case, moreover, a bracket 26 is associated with each extension terminal 15, constrained by the same bolt 21 and protruding outwards with respect to the sides 11a of the body 11.

The function of the bracket 26 is to keep the canvas 14 at the desired distance from the sides 11a, preventing it from folding back towards the latter.

A pair of pulleys is associated with each side 11a, protruding with respect to the sides 11a; one is a drawing pulley 27 and one is a return pulley 28.

In this case the return pulleys 28 are attached in correspondence with the rear end of the body 11, directly on the sides 11a.

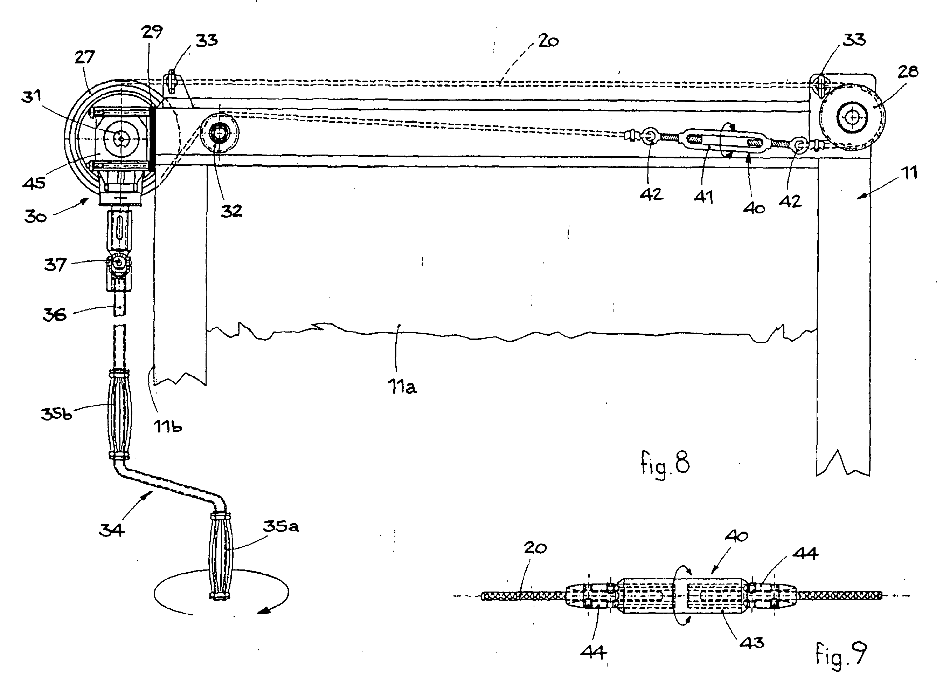

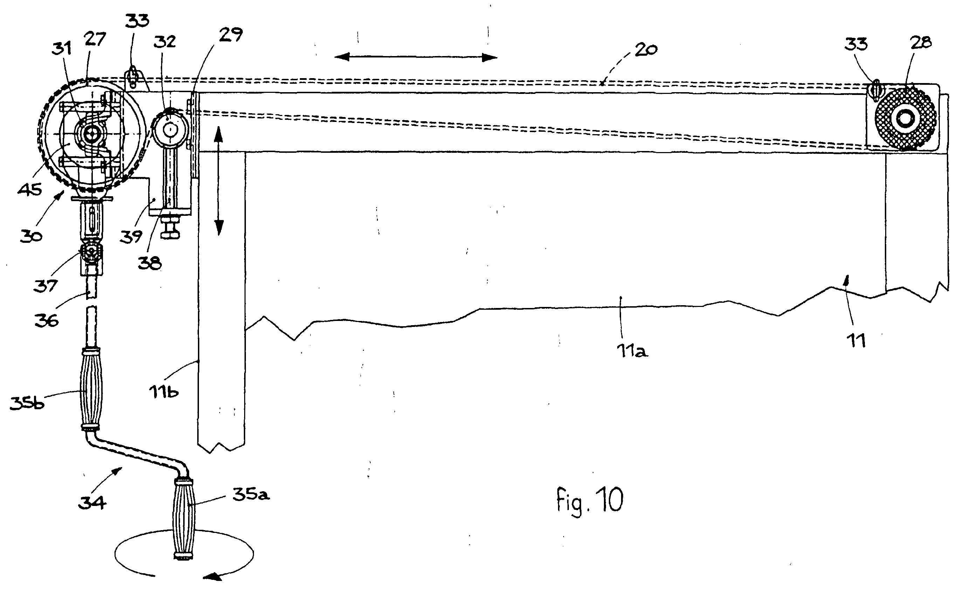

The drawing pulleys 27, on the contrary, are attached by means of plates 29 to the front wall 11b of the body 11, and protrude with respect thereto; the drawing pulleys 27 are also connected to each other transversely by means of a shaft 31 (Figs. 8 and 10).

A relative cable 20, closed in a ring and constrained inside longitudinal tubes 19, is mounted on each pair of pulleys 27, 28.

Between the pulleys 27 and 28 there is an intermediate pulley 32, with a return function, and two guide rings 33, inside which the cable 20 is inserted; the guide rings 33 prevent the cable 20 from coming loose from the pulleys 27, 28.

In the embodiment shown in Fig. 10, the intermediate pulley 32 is mounted on a threaded rod 38, substantially vertical, screwed to a mating support 39 solid with the body 11.

In this case, by screwing/unscrewing the threaded rod 38 with respect to the support 39 it is possible to raise/lower the intermediate pulley 32 and thus adjust the tension of the cable 20 on which said intermediate pulley 32 acts.

In the embodiments shown in Figs. 8 and 9, the cables 20 are tensioned by means of tie bars 40, each of which is coaxially associated with the ends of a relative cable 20 and able to define a closed ring thereof.

In the embodiment shown in Fig. 8, the tie bar 40 comprises a rotary connection element 41, at the ends of which respective eyelets 42 are screwed to which the ends of the cables 20 are attached.

The rotation of the connection element 41 in one direction brings the eyelets 42 reciprocally closer, and therefore causes an increase in the tension of the cable 20; rotating in the other direction it causes the eyelets 42 to be reciprocally distanced, and the cable 20 is therefore loosened.

In the variant shown in Fig. 9, the tie bar 40 comprises a rotary outer bushing 43, to the ends of which respective inner bushings 44, associated with the ends of the cable 20, are screwed.

In this case too, the rotation of the outer bushing 43 causes the cable 20 to be tensioned in one direction and to be loosened in the other direction.

The drawing pulleys 27 are associated with a drawing assembly 30 which in this case is manually activated and arranged on the left side 11a of the body 11, by means of which the cables 20 are drawn to move the canvas 14.

The drawing assembly 30 comprises a crank 34, provided with two grips 35a, 35b, associated with a rod 36 equipped with an articulated joint 37; the rod 36 is connected with a mechanical reduction unit 45 associated with the shaft 31 of said pulleys 27.

By acting on the crank 34 the rod 36 is made to rotate and then, by means of the mechanical reduction unit 45, the two drawing pulleys 27 which draw the respective cables 20.

The drawn cables 20 cause the supporting elements 13 to slide along the sides 11a of the body 11 and consequently the canvas 14 associated therewith to move.

By acting on the crank 34 in one direction or another, the canvas 14 can be selectively moved from an open position, in which it is folded back towards the front wall 11b of the body 11 with the supporting elements 13 close to each other (Fig. 1), to a closed position in which it is extended to completely cover the body 11 and the supporting elements 13 are distanced from each other over the length of the body 11 (Fig. 2).

The pads 25, resting on the upper profile 111a of the sides 11a, reduces the friction between the parts in contact, thus encouraging the sliding of the supporting elements 13 and facilitating the movement of the canvas 14.

The pads 25 also greatly reduce wear on the ends 13a of the supporting elements 13, the extension terminals 15 and the sides 11a, limiting the need for maintenance of the cover 10.

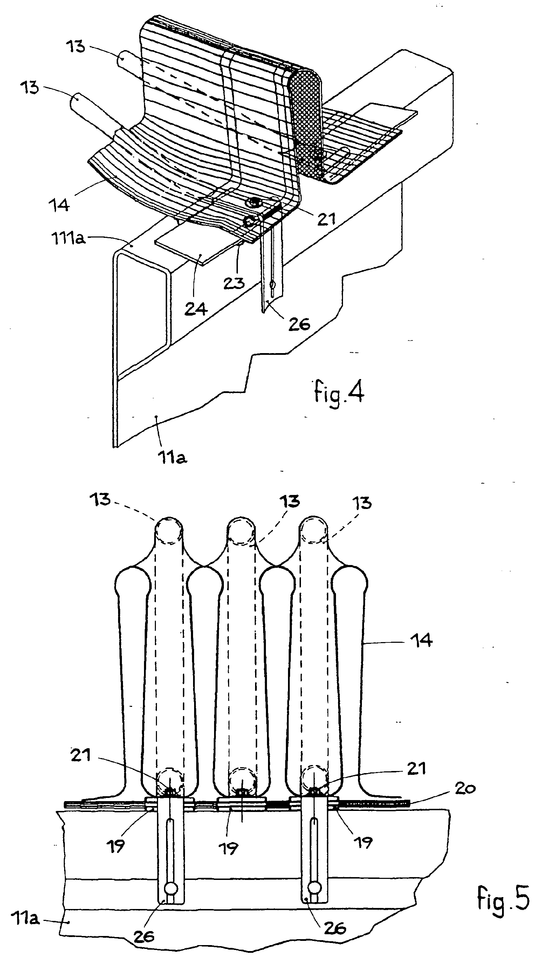

Moving the canvas 14 into its open position is made even easier by the longitudinal bands 24 which, since they are made of stiffer material than the canvas 14, bend substantially in a "Ω" shape in those segments between the supporting elements 13, causing the canvas 14 to be raised and allowing it to be folded back uniformly and compactly (Figs. 4 and 5).

In the closed position, the canvas can be stretched in an optimum manner by acting on the means to tension the cables 20, that is, according to the specific embodiment, the intermediate pulley 32 or the tie bars 40.

Said tensioning means, as they are mounted in a lateral position on the body 11, allow to use the cover 10 even on bodies 11 provided with a rear aperture.

It is obvious however that modifications and additions can be made to the cover 10 as described heretofore, but these shall remain within the field and scope of this invention.

For example, the supporting elements 13 can have a different conformation and/or consist of solid, not tubular, pieces.

Or instead of the cables 20 there can be toothed belt means or similar.

Moreover, even if not described, it is obvious that electric, hydraulic or pneumatic drive means may be provided instead of the manual drive shown here.

It is also obvious that, although the invention has been described with reference to specific examples, a skilled person in the field shall certainly be able to achieve many other equivalent forms of a canvas cover for trucks, all of which shall come within the field and scope of this invention.

## Claims

1. Canvas cover to close the bodies (11) of trucks (12) including at least a base plane (11c), two lateral sides (11a) and a front wall (11b), said cover comprising at least a canvas (14) associated with relative supporting elements (13) the ends (13a of which cooperate in a sliding fashion with said lateral sides (11a), and movement means able to move said canvas (14) and said supporting elements (13) from a folded open position to an extended position to cover said body (11), said ends (13a) being associated at least at the lower part with means (25) made of anti-friction material able to facilitate the sliding of said supporting elements (13) on said sides (11a), wherein said movement means comprise cable means (20) constrained to said supporting elements (13), said cable means (20) cooperating with at least one pair of drawing pulleys (27) and one pair of return pulleys (28) associated to a drawing assembly (30), said drawing assembly (30) comprising manual drive means (34), **characterized in that** said manual drive means (34) are of the crank type and are connected, by means of a rod (36) equipped with an articulated joint (37), to a mechanical reduction unit (45) coupled with said drawing pulley (27).

2. Canvas as in claim 1, **characterized in that** said cable means (20) are associated with tensioning means arranged outside said body (11) in correspondence with said sides (11a).

3. Canvas cover as in Claim 2, **characterized in that** said tensioning means comprise at least a tie bar (40) coaxially associated with said cable means (20).

4. Canvas cover as in Claim.3, **characterized in that** said tie bar (40) comprises at least a central rotary element (41, 43) able to adjust the tension of said cable means (20), and two end elements (42, 44) on which the ends of said cable means (20) are constrained.

5. Canvas cover as in Claim 2, **characterized in that** said tensioning means comprise at least an intermediate pulley (32), arranged between said pulleys (27, 28) with a return function for said cable means (20), said intermediate pulley (32) being mounted on mobile support means (38) which can be adjusted to define the tensioning of said cable means (20).

6. Canvas cover as in Claim 1, **characterized in that** said canvas (14) comprises lateral edges cooperating with said sides (11a), and said lateral edges are associated with longitudinal bands (24) inserted inside closed flaps (23) made laterally on said canvas (14) and made of semi-rigid material able to facilitate the folding back of said canvas (14) in said open position.

7. Canvas cover as in Claim 6, **characterized in that** said longitudinal bands (24) are made of high density polyurethane (PEHD).

8. Canvas cover as in Claim 1, **characterized in that** said means (25) to facilitate the sliding of said supporting elements (13) on said sides (11a) are made of a material highly resistant to wear, such as composite polyethylene or similar.

9. Canvas cover as in Claim 8, **characterized in that** said means (25) are of the inter-changeable type.

10. Canvas cover as in Claim 1, **characterized in that** said ends (13a) are of the extendible type to adapt the length of said supporting elements (13) to the distance between said sides (11a).

11. Canvas cover as in Claim 10, **characterized in that** said ends (13a) can be associated with extension terminals (15) able to be clamped in different positions on the same ends (13a) to vary the length of said supporting elements (13) .

12. Canvas cover as in Claim 1, **characterized in that** said supporting elements (13) are associated with bracket means (26), protruding towards the outside, able to keep said canvas (14) distanced from said sides (11a).

## Patentansprüche

1. Planenabdeckung zum Schließen der Pritschen (11) von Lastkraftwagen (12), die mindestens eine Flachboden (11c), zwei Seitenwände (11a) und eine Frontwand (11b) aufweisen, wobei diese Abdeckung mindestens eine Plane (14), die mit entsprechenden Stützmitteln (13) verbunden ist, deren Enden (13a) mit diesen Seitenwänden (11a) gleitend mitwirken, sowie Versetzmittel umfaßt, die dazu geeignet sind, diese Plane (14) und diese Stützmittel (13) von einer gefalteten offenen Lage in eine gespannte Lage zum Abdecken dieser Pritsche (11) zu versetzen, wobei diese Enden (13a) mindestens in ihrem Unterteil mit Mitteln (25) verbunden sind, die aus reibungsfreiem Material bestehen und dazu geeignet sind, das Gleiten dieser Stützmittel (13) auf diesen Seitenwänden (11a) zu erleichtern, wobei diese Versetzmittel an diesen Stützmitteln (13) gebundene Seilmittel (20) umfassen und diese Seilmittel (20) mit mindestens einem Paar von Zugscheiben (27) und einem Paar von Umlenkscheiben (28) mitwirken, die mit einem Zugsatz (30) verbunden sind, wobei dieser Zugsatz (30) Handantriebsmittel (34) umfaßt, **dadurch gekennzeichnet, daß** diese Handantriebsmittel (34) Kurbelmittel sind und durch einen mit einer Gelenkkupplung (37) versehenen Stab (36) mit einer mit dieser Zugscheibe (27) gekuppelten mechanischen Untersetzungseinheit (45) verbunden sind.

2. Planenabdeckung nach Anspruch 1, **dadurch gekennzeichnet, daß** diese Seilmittel (20) mit außerhalb der Pritsche (11) im Bereich dieser Seitenwände (11a) angeordneten Spannmitteln verbunden sind.

3. Planenabdeckung nach Anspruch 2, **dadurch gekennzeichnet, daß** diese Spannmittel mindestens einen Zugstab (40) umfassen, der mit diesen Seilmitteln (20) koaxial verbunden ist.

4. Planenabdeckung nach Anspruch 3, **dadurch gekennzeichnet, daß** dieser Zugstab (40) mindestens einen zum Regeln der Spannung dieser Seilmittel (20) geeigneten mittleren Drehteil (41, 43) sowie zwei Endteile (42, 44) umfaßt, an denen die Enden dieser Seilmittel (20) gebunden sind.

5. Planenabdeckung nach Anspruch 2, **dadurch gekennzeichnet, daß** diese Spannmittel mindestens eine Zwischenscheibe (32) umfassen, die als Umlenkscheibe für diese Seilmittel (20) zwischen diesen Scheiben (27, 28) angeordnet ist, wobei diese Zwischenscheibe (32) an beweglichen Stützmitteln (38) angebracht ist, die zur Bestimmung der Spannung dieser Seilmittel (20) geregelt werden können.

6. Planenabdeckung nach Anspruch 1, **dadurch gekennzeichnet, daß** diese Plane (14) mit diesen Seitenwänden (11a) mitwirkende Seitenränder umfaßt, wobei diese Seitenränder mit Längsbändern (24) verbunden sind, die in seitlich dieser Plane (14) vorhandenen geschlossenen Klappen (23) eingesetzt sind und aus halbstarrem Material bestehen und dazu geeignet sind, die Faltung dieser Plane (14) in dieser offenen Lage zu erleichtern.

7. Planenabdeckung nach Anspruch 6, **dadurch gekennzeichnet, daß** diese Längsbänder (24) aus hochdichtem Polyurethan (PEHD) bestehen.

8. Planenabdeckung nach Anspruch 1, **dadurch gekennzeichnet, daß** diese Mittel (25) zum Erleichtern des Gleitens dieser Stützmittel (13) auf diesen Seitenwänden (11a) aus einem sehr verschleißfesten Material wie Verbundpolyäthylen u. dgl. bestehen.

9. Planenabdeckung nach Anspruch 8, **dadurch gekennzeichnet, daß** diese Mittel (25) austauschbar sind.

10. Planenabdeckung nach Anspruch 1, **dadurch gekennzeichnet, daß** diese Enden (13a) dehnbar sind, um die Länge dieser Stützmittel (13) dem Abstand zwischen diesen Seitenwänden (11a) anzupassen.

11. Planenabdeckung nach Anspruch 10, **dadurch gekennzeichnet, daß** diese Enden (13a) mit Verlängerungsendteilen (15) verbunden sein können, die dazu geeignet sind, in verschiedenen Stellungen an denselben Enden (13a) befestigt zu sein, um die Länge dieser Stützmittel (13) zu ändern.

12. Planenabdeckung nach Anspruch 1, **dadurch gekennzeichnet, daß** diese Stützmittel (13) mit nach außen vorstehenden Bügelmitteln (26) verbunden sind, die dazu geeignet sind, diese Plane (14) im Abstand von diesen Seitenwänden (11a) zu halten.

## Revendications

1. Couverture à bâche pour fermer les bennes (11) des camions (12) qui comprennent au moins un plateau de base (11c), deux côtés latéraux (11a) et une paroi antérieure (11b), ladite couverture comprenant au moins une bâche (14) associée à des relatifs éléments-supports (13), les extrémités (13a) desquels coopèrent d'une façon coulissante avec lesdits côtés latéraux (11a) , et des moyens de mouvement aptes à mouvoir ladite bâche (14) et lesdits éléments-supports (13) d'une position ouverte repliée vers une position étendue pour couvrir ladite benne (11), lesdites extrémités (13a) étant associées au moins dans la partie inférieure à des moyens (25) faits en matériel antifriction apte à faciliter le coulissement desdits éléments-supports (13) sur lesdits côtés (11a), dans laquelle lesdits moyens de mouvement comprennent des moyens à câble (20) assujettis auxdits éléments-supports (13), lesdits moyens à câble (20) coopèrant au moins avec une paire de poulies de traction (27) et une paire de poulies de renvoi (28) associées à un groupe de traction (30), ledit groupe de traction (30) comprenant des moyens d'actionnement manuel (34), **caractérisée en ce que** lesdits moyens d'actionnement manuel (34) sont du type à manivelle et sont reliés par une tige (36) pourvue d'un joint articulé (37) à une unité de réduction mécanique (45) couplée avec ladite poulie de traction (27)

2. Couverture à bâche selon la revendication 1, **caractérisée en ce que** lesdits moyens à câble (20) sont associés à des moyens de tension disposés à l'extérieur de ladite benne (11) dans la zone desdits côtés (11a).

3. Couverture à bâche selon la revendication 2, **caractérisée en ce que** lesdits moyens de tension comprennent au moins un tirant (40) associé coaxialement auxdits moyens à câble (20).

4. Couverture à bâche selon la revendication 3, **caractérisée en ce que** ledit tirant (40) comprend au moins un élément central pivotant (41, 43) apte à régler la tension desdits moyens à câble (20) et deux éléments d'extrémité (42, 44), sur lesquels les extrémités desdits moyens à câble (20) sont retenues.

5. Couverture à bâche selon la revendication 2, **caractérisée en ce que** lesdits moyens de tension comprennent au moins une poulie untermédiaire (32) disposée entre lesdites poulies (27, 28) avec une fonction de renvoi pour lesdits moyens à câble (20), ladite poulie intermédiaire (32) étant montée sur des moyens-supports mobiles (38), qui peuvent être réglés pour définir la tension desdits moyens à câble (20).

6. Couverture à bâche selon la revendication 1, **caractérisé en ce que** ladite bâche (14) comprend des bords latéraux qui coopèrent avec lesdits côtés (11a), et lesdits bords latéraux sont associés à des bandes longitudinales (24) introduites dans des revers fermés (23) réalisés latéralement sur ladite bâche (14) et faites en matériel semi-rigide apte à faciliter le repliage de ladite bâche (14) dans ladite position d'ouverture.

7. Couverture à bâche selon la revendication 6, **caractérisée en ce que** lesdites bandes longitudinales (24) sont faites en polyuréthane de haute densité (PEHD).

8. Couverture à bâche selon la revendication 1, **caractérisée en ce que** lesdits moyens (25) pour faciliter le coulissement desdits éléments-supports (13) sur lesdits côtés latéraux (11a) sont faits en matériel très résistant à l'usure comme le polyéthylène composite ou autres matériels de ce genre.

9. Couverture à bâche selon la revendication 8, **caractérisée en ce que** lesdits moyens (25) sont du type interchangeable .

10. Couverture à bâche selon la revendication 1, **caractérisée en ce que** lesdites extrémités (13a) sont du type extensible, pour adapter la longueur desdits éléments-supports (13) à la distance entre lesdits côtés (11a).

11. Couverture à bâche selon la revendication 10, **caractérisée en ce que** lesdites extrémités (13a) peuvent être associées à des parties terminales d'extension (15) aptes à être fixés dans des positions différentes sur les mêmes extrémités (13a) pour changer la longueur desdits éléments-supports (13).

12. Couverture à bâche selon la revendication 1, **caractérisée en ce que** lesdits éléments-supports (13) sont associés à des moyens à bride (26) en saillie vers l'extérieur, aptes à maintenir ladite bâche (14) espacée desdits côtés (11a).
